**Europäisches Patentamt**

**European Patent Office**

**Office européen des brevets**

(19)

(11) Veröffentlichungsnummer: **0 109 026**
**B1**

# (12) EUROPÄISCHE PATENTSCHRIFT

(45) Veröffentlichungstag der Patentschrift:
**11.03.87**

(21) Anmeldenummer: **83111111.7**

(22) Anmeldetag: **07.11.83**

(51) Int. Cl.⁴: **F 16 B 13/06**

(54) **Hülsenförmiger Spreizdübel.**

(30) Priorität: **10.11.82 DE 3241596**
**17.05.83 DE 3317937**

(43) Veröffentlichungstag der Anmeldung:
**23.05.84 Patentblatt 84/21**

(45) Bekanntmachung des Hinweises auf die Patenterteilung:
**11.03.87 Patentblatt 87/11**

(84) Benannte Vertragsstaaten:
**AT BE CH FR GB IT LI NL SE**

(56) Entgegenhaltungen:
**EP - A - 0 064 166**
**AT - B - 292 280**
**DE - A - 2 711 845**
**DE - A - 2 758 091**

(73) Patentinhaber: **HILTI Aktiengesellschaft,**
**FL-9494 Schaan (LI)**

(72) Erfinder: **Mirsberger, Helmut, Friedrich-List-Strasse 118,**
**D-8000 München 70 (DE)**
Erfinder: **Popp, Franz, Kennedystrasse 2,**
**D-8021 Puchheim (DE)**

(74) Vertreter: **Wildi, Roland, Hilti Aktiengesellschaft**
**Patentabteilung, FL-9490 Schaan (LI)**

## Beschreibung

Die Erfindung betrifft einen hülsenförmigen Spreizdübel mit von einem Spreizelement radial ausschwenkbaren, über mindestens ein Drehgelenk mit normal zur Dübelachse verlaufender Achse an der Hülse angelenkten, axial hintereinandergereihten Spreizzungen, deren freie Enden eine die Hülsenwandstärke übersteigende radiale Erstreckung aufweisen, wobei die Spreizzungen um das radiale Übermass in unausgeschwenkter Stellung in die Hülsenbohrung ragen.

Die Spreizdübel der in Rede stehenden Art finden sowohl in Vollmaterial als auch in Hohlkammern aufweisendem Verankerungsgut, wie beispielsweise Ziegelmauerwerk, Verwendung. Die Höhe des Verankerungswertes richtet sich, unabhängig von der Art des Verankerungsgutes, insbesondere nach der Anzahl mit dem Verankerungsgut in Eingriff kommender Spreizzungen, d.h. je mehr Spreizzungen als tragende Teile am Verankerungsgut angreifen, desto höher liegt der Verankerungswert.

Bei einem bekannten Spreizdübel (CH-A 457 981) stehen die hintereinandergereihten Spreizzungen, durch streifenförmige Teile von der Hülse getrennt, in axialem Abstand zueinander. An diesem streifenförmigen Teilen der Hülse sind die Spreizzungen über ein Filmscharnier einseitig angelenkt. Mittels eines als Stift, Schlagschraube, Hohlschraube oder dgl. ausgebildeten Spreizelementes werden die Spreizzungen radial ausgelenkt und können durch Verrastung mittels einer vorgesehenen Verzahnung in ausgeschwenkter Stellung arretiert werden. Der Teilungsabstand zwischen den Spreizzungen ist aufgrund dieser Anlenkung relativ gross, so dass über die Hülsenlänge nur eine relativ kleine Anzahl von Spreizzungen hintereinander angeordnet werden kann. Der Verankerungswert dieses Spreizdübels befriedigt demzufolge nicht.

Aufgabe der Erfindung ist es, einen Spreizdübel mit ausschwenkbaren Spreizzungen zu schaffen, der sich durch höhere Verankerungswerte auszeichnet.

Erfindungsgemäss wird die Aufgabe dadurch gelöst, dass die Spreizzungen nur an ihren gegenüberliegenden Seiten mittels Drehgelenken an der Hülse angelenkt sind.

Durch das seitliche Anlenken der Spreizzungen kann auf die axial zwischen den Spreizzungen liegenden streifenförmigen Teile der Hülse verzichtet werden. Blindlängen zwischen den Spreizungen, wie sie sich bei dem bekannten Spreizdübel durch das in Dübellängsrichtung sich erstreckende Mass der streifenförmigen Teile ergeben, fallen dahin. Auf diese Weise lässt sich eine wesentlich höhere Anzahl Spreizzungen direkt hintereinanderreihen.

Bei einer möglichen Ausführungsform des Spreizdübels überragen die Spreizzungen in nicht in eine Aufnahmeöffnung eingeführtem Zustand des Dübels die Hülse um das radiale Übermass. Beim Einführen des Spreizdübels in die im wesentlichen dem Hülsendurchmesser entsprechende Aufnahmeöffnung werden die Spreizzungen entgegen der durch die Biegeverformung der Drehgelenke auftretenden Torsionskraft in die Hülsenbohrung eingeschwenkt. Die letztlich im Bereich von Hohlkammern des Verankerungsgutes befindlichen Spreizzungen schwenken durch die Torsionskraft selbsttätig wieder aus und schaffen so eine hintergreifende formschlüssige Verankerung. Das anschliessend in die Hülsenbohrung vorzutreibende Spreizelement dient für diese Spreizzungen als deren abermaliges Einschwenken unterbindendes Verriegelungsorgan.

Ebenso können bei einer anderen Ausführungsform des Spreizdübels die Spreizzungen bereits vor dem Einführen in eine Aufnahmeöffnung in die Hülsenbohrung einragen. Nach dem Einführen des Spreizdübels in die Aufnahmeöffnung wird in diesen das Spreizelement vorgetrieben, wodurch die Spreizzungen zum Verankerungszwecke um das radiale Übermass aus der Hülse ausgeschwenkt werden. Das Ausschwenken erfolgt dabei wiederum entgegen der durch die Biegeverformung der Drehgelenke auftretenden Torsionskraft, die bei einer Entnahme des Spreizelementes das selbsttätige Zurückschwenken der Spreizzungen in die Hülsenbohrung bewirkt.

Sowohl bei relativ weichem Verankerungsgut als auch beim Vorhandensein von Hohlkammern im Verankerungsgut werden hohe Verankerungswerte durch tiefen, formschlüssigen Eingriff der Spreizzungen erzielt. Hierzu ist ein weites Ausschwenken der Spreizzungen erforderlich, was vorzugsweise durch Anordnen der Drehgelenke an dem entgegen der Einführrichtung weisenden Ende der Seiten der Spreizzungen erreicht wird.

Nach einer bevorzugten Ausführungsform sind die Drehgelenke als Stege ausgebildet und einstückig mit der Hülse und den Spreizzungen verbunden. Diese Stege erlauben sowohl ein Schwenken der Spreizzungen als auch ein geringfügiges Versetzen letzterer in Einführrichtung, was für das Erzielen einer Verrastung oder Abstützung der jeweils entgegen der Einführrichtung benachbarten Spreizzunge vorteilhaft ist. Ausserdem wird bei dieser Ausbildung die zuvor angeordnete selbsttätige Rückstellung der Spreizzungen in die ursprüngliche Schwenkstellung gewährleistet.

Zweckmässig ist der Spreizdübel aus Kunststoff gefertigt. Aus Herstellungsgründen kann er aus Schalensektoren zusammengesetzt sein, die durch Verschweissung oder mechanische Hilfsmittel, wie Ringe, zu einer Hülse zusammengefügt sind.

Vorzugsweise ist der Schwenkradius des Spreizzungenbereichs mit der grössten radialen Erstreckung grösser als der Abstand zwischen der Schwenkachse einer Spreizzunge und dem entgegen der Einführrichtung weisenden Ende der in Einführrichtung gesehen nächsten Spreizzunge. Dadurch kann sich zum Verrasten der Spreizzungen das freie Ende der ausgeschwenkten Spreizzungen an dem entgegen der Einführrichtung des Spreizdübels gerichteten Ende der jeweils benachbarten Spreizungen abschultern.

Die Erfindung wird nun anhand einer Zeichnung, die ein Ausführungsbeispiel wiedergibt, näher erläutert. Es zeigen:

Fig. 1 einen ungespreizten Dübel in Ansicht,
Fig. 2 eine Ansicht des Dübels gemäss Sichtpfeil II in Fig. 1,
Fig. 3 einen Schnitt durch einen Schalensektor des Dübels, gemäss Schnittverlauf III-III der Fig. 1,
Fig. 4 den Schnitt durch den Schalensektor der Fig. 3 mit durch ein Spreizelement ausgeschwenkten Spreizungen.

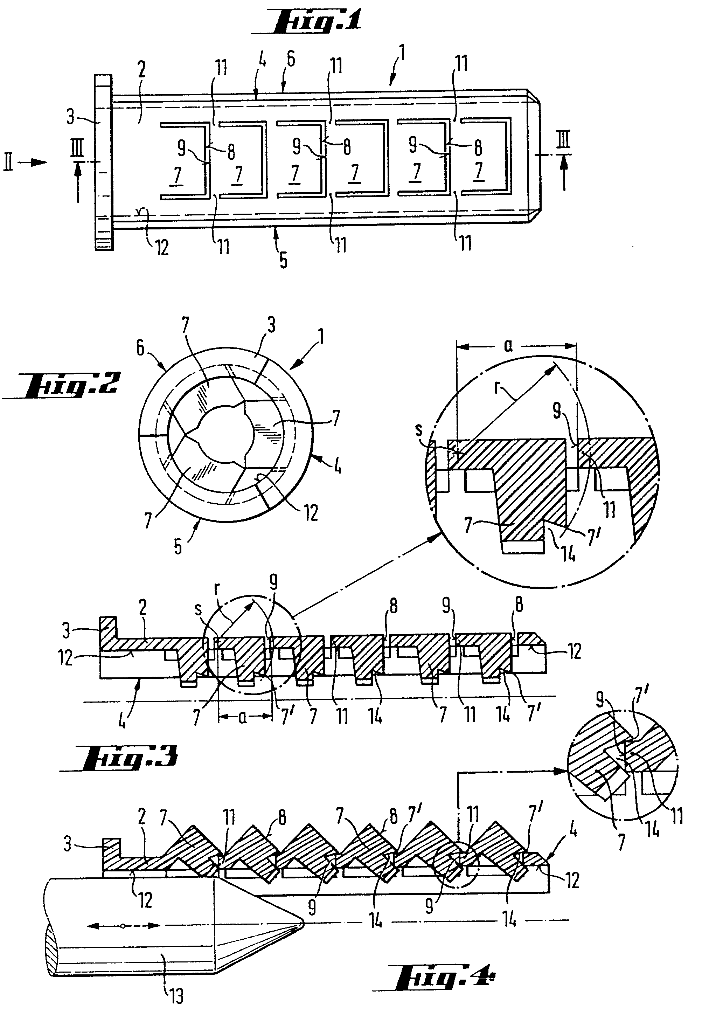

Der Spreizdübel nach Fig. 1 ist im wesentlichen als insgesamt mit 1 bezeichnete Hülse ausgebildet. Die Hülse 1 besteht aus einem Schaft 2 und einem daran angeformten Kopf 3.

Zur Vereinfachung der Herstellbarkeit setzt sich die Hülse 1, wie die Fig. 2 verdeutlicht, aus drei Schalensektoren 4, 5, 6 zusammen, die über deren Längsflanken miteinander verschweisst sind.

Jeder der Schalensektoren trägt in einer Reihe hintereinandergereihte Spreizungen 7. Letztere weisen ein in Einführrichtung des Dübels weisendes freies Ende 8 auf und sind an dem gegenüberliegenden Ende 9 über Stege 11 an der Hülse 1 schwenkbar angelenkt. Die radiale Erstreckung der Spreizungen 7 bzw. deren Dicke ist grösser als die Wandstärke der Hülse 1, so dass die Spreizungen 7 in Ausgangsstellung (Fig. 1, 2, 3) in die Hülsenbohrung 12 ragen. Wie die Fig. 3 verdeutlicht, ist der Schwenkradius r der Spreizungen 7 grösser als der Abstand a zwischen der Schwenkachse s und dem entgegen der Einführrichtung weisenden Ende 9 der jeweils benachbarten Spreizungen 7.

Durch Vortreiben eines stiftförmigen Spreizelementes 13 in die Hülse 1, wobei der Durchmesser des Spreizelementes annähernd jenem der Hülsenbohrung 12 entspricht, werden die Spreizungen 7 ausgeschwenkt. Aufgrund des voran aufgezeigten Massverhältnisses von Schwenkradius r zu Abstand a kommt es so am Ende des Ausschwenkvorganges zum Verrasten der den Schwenkradius r beschreibenden Kante 7' der Spreizungen 7 an dem in Einführrichtung benachbarten Ende 9 der nächsten Spreizungen 7. Die Verrastung kann, wie den Fig. 3 und 4 zu entnehmen ist, durch eine Kerbe 14 an den Spreizungen 7 verbessert werden.

Nach dem Verrasten der Spreizungen 7 kann das Spreizelement 13 aus der Hülse 1 zurückgezogen werden, wobei die Verrastung der Spreizungen 7 und damit die Verankerung des Dübels aufrechterhalten bleibt. Die Fig. 4 zeigt eine teilweise zurückgezogene Stellung des Spreizelementes 13. Da alle Schalensektoren 4, 5, 6 Spreizungen 7 aufweisen, kommt es so zu einer über den Umfang der Hülse 1 gleichmässig verteilten, anhaltenden Verankerung.

## Patentansprüche

1. Hülsenförmiger Spreizdübel mit von einem Spreizelement (13) radial ausschwenkbaren, über mindestens ein Drehgelenk (11) mit normal zur Dübelachse verlaufender Achse (s) an der Hülse (1) angelenkten, axial hintereinandergereihten Spreizungen (7), deren freie Enden (8) eine die Hülsenwandstärke übersteigende radiale Erstreckung aufweisen, wobei die Spreizungen (7) um das radiale Übermass in unausgeschwenkter Stellung in die Hülsenbohrung (12) ragen, dadurch gekennzeichnet, dass die Spreizungen (7) nur an ihren gegenüberliegenden Seiten mittels Drehgelenken (11) an der Hülse (1) angelenkt sind.

2. Spreizdübel nach Anspruch 1, dadurch gekennzeichnet, dass die Drehgelenke (11) an dem entgegen der Einführrichtung weisenden Ende (9) der gegenüberliegenden Seiten der Spreizungen (7) angeordnet sind.

3. Spreizdübel nach einem der Ansprüche 1 und 2, dadurch gekennzeichnet, dass die Drehgelenke (11) einstückig mit der Hülse (1) und den Spreizungen (7) verbunden sind.

4. Spreizdübel nach einem der Ansprüche 1 bis 3, dadurch gekennzeichnet, dass der Schwenkradius (r) des Spreizungenbereichs mit der grössten radialen Erstreckung grösser als der Abstand (a) zwischen der Schwenkachse (s) einer Spreizung (7) und dem entgegen der Einführrichtung weisenden Ende (9) der in Einführrichtung gesehen nächsten Spreizung (7) ist.

## Claims

1. A sleeve-shaped expansible dowel having expansion tongues (7) which can be swung out radially by an expansion element (13) and which are hinged to the sleeve (1) by way of at least one pivot joint (11) having its axis (s) extending normal to the dowel axis and which are ranged axially one behind the other and the free ends (8) of which have a radial extent exceeding the sleeve wall thickness, in which respect the expansion tongues (7), in their non-swung-out position, project into the sleeve bore (12) by the radial oversize, characterised in that the expansion tongues (7) are hinged to the sleeve (1) by means of pivot joints (11).

2. An expansible dowel according to claim 1, characterised in that the pivot joints (11) are arranged at the ends (9) of the opposite sides of the expansion tongues (7) pointing contrary to the insertion direction.

3. An expansible dowel according to one of claims 1 and 2, characterised in that the pivot joints (11) are connected in one piece to the sleeve (1) and the expansion tongues (7).

4. An expansible dowel according to one of claims 1 to 3, characterised in that the swivel radius (r) of the expansion tongue region with the greatest radial extent is greater than the distance (a) between the swivel axis (s) of an expansion tongue (7) and the end (9), pointing contrary to the insertion direction, of the next expansion tongue (7) when considered in the insertion direction.

**Revendications**

1. Cheville expansible en forme de douille avec des languettes écartables (7) pouvant être repoussées radialement par un élément d'expansion (13) qui sont rattachées à la douille (1) par au moins une articulation tournante (11) dont l'axe (s) s'étend perpendiculairement à l'axe de la cheville et qui sont montées en série dans le sens axial, les extrémités libres (8) desdites languettes écartables (7) présentant une extension radiale supérieure à l'épaisseur de la paroi de la douille et dépassant, dans la position non écartée, de l'excédent radial dans l'alésage (12) de la douille, caractérisée en ce que les languettes écartables (7) ne sont rattachées à la douille (1) qu'à leurs côtés opposés au moyen d'articulations tournantes (11).

2. Cheville expansible selon la revendication 1, caractérisée en ce que les articulations tournantes (11) sont disposées à l'extrémité (9) des côtés opposés des languettes écartables (7), orientée en sens inverse de la direction d'introduction.

3. Cheville expansible selon l'une des revendications 1 et 2, caractérisée en ce que les articulations tournantes (11) sont réunies en une seule pièce avec la douille (1) et les languettes écartables (7).

4. Cheville expansible selon l'une des revendications 1 à 3, caractérisée en ce que le rayon de pivotement (r) de la région des languettes écartables avec la plus grande extension radiale est plus grand que la distance (a) entre l'axe de pivotement (s) d'une languette écartable (7) et l'extrémité (9), orientée en sens inverse de la direction d'introduction, de la languette écartable (7) suivante vue dans la direction d'introduction.

Fig. 1

Fig. 2

Fig. 3

Fig. 4